# Europäisches Patentamt
# European Patent Office
# Office européen des brevets

(19)

(11) Veröffentlichungsnummer: **0 252 164**
B1

(12)

# EUROPÄISCHE PATENTSCHRIFT

(45) Veröffentlichungstag der Patentschrift:
05.12.90

(21) Anmeldenummer: 86108841.7

(22) Anmeldetag: 28.06.86

(51) Int. Cl.⁵: **G01B 7/28,** G01B 21/20,
B61K 9/12, B23B 5/28

(54) Verfahren zum Ermitteln der radialen Lage eines durch Reprofilierung herzustellenden Neuprofils und Einrichtung zur Durchführung des Verfahrens.

(43) Veröffentlichungstag der Anmeldung:
13.01.88 Patentblatt 88/2

(45) Bekanntmachung des Hinweises auf die Patenterteilung:
05.12.90 Patentblatt 90/49

(84) Benannte Vertragsstaaten:
DE FR IT

(56) Entgegenhaltungen:
DE-A- 1 473 850
DE-A- 2 513 389
DE-B- 1 293 810
DE-B- 1 427 003
DE-C- 1 129 033
DE-C- 2 537 086
FR-A- 2 283 422

(73) Patentinhaber: **Wilhelm Hegenscheidt Gesellschaft mbH, Bernhard-Schondorff-Platz, D-5140 Erkelenz(DE)**

(72) Erfinder: **Ligacz, Herbert, Am Vogelsang 35a, D-5140 Erkelenz(DE)**
Erfinder: **Heimann, Alfred, Dr.Ing., Trierer Strasse 38, D-5100 Aachen(DE)**
Erfinder: **Klosterhalfen, Hartwig, Dipl.Ing., Genter Strasse 24, D-5160 Düren(DE)**
Erfinder: **Wittkopp, Helmut, Dipl.-Ing., Cusanushof 87, D-5140 Erkelenz(DE)**

(74) Vertreter: **Liermann, Manfred, Schillingsstrasse 335, D-5160 Düren(DE)**

**Beschreibung**

Die Erfindung betrifft ein Verfahren zum Ermitteln der radialen Lage eines durch Reprofilierung herzustellenden Neuprofils in Bezug auf ein nicht dem Sollprofil entsprechendes Istprofil eines relativ zu einem Bezugspunkt ortsfesten Eisenbahnrades, bei dem die axiale Lage des Istprofils bekannt ist, sowie eine Einrichtung zur Durchführung des Verfahrens.

Verfahren zur Vermessung der durch Reprofilierung herzustellenden Radsatzprofile an verschlissenen Radsatzprofilen sowie die dazugehörigen Einrichtungen sind bereits bekannt geworden durch die DE-B 1 552 335, DE-C 2 537 086 und FR-A 1 259 442. Solche bekanntgewordenen Einrichtungen arbeiten in weiten Bereichen befriedigend. Sie sind jedoch nicht in der Lage, die korrekte Lage eines zu reprofilierenden Profils zu bestimmen, wenn starker Spurkranzverschleiß und insbesondere eine sehr steile verschlissene Spurkranzflanke vorliegt. Eine Fehlmessung ist jedoch unwirtschaftlich, weil sie entweder einen Korrekturschnitt erfordert oder im ersten Schnitt unnötig viel Werkstoff zerspant.

Der Erfindung liegt damit die Aufgabe zugrunde, ein Verfahren vorzuschlagen, mit dem bei CNC (computerised numerical control) gesteuerten Maschinen oder mit Hilfe einer entsprechenden Steuerung eine korrekte Erfassung des Istprofils und eine richtige Zuordnung des Sollprofils möglich ist, so daß eine Wiederherstellung des Sollprofils bei sparsamster Zerspanung und geringster Schnittanzahl möglich ist. Eine weitere Aufgabe der Erfindung liegt darin, eine zur Durchführung des Verfahrens geeignete Vorrichtung vorzuschlagen.

Bezüglich des Verfahrens ist die Aufgabe erfindungsgemäß, ausgehend von der eingangs beschriebenen Gattung, dadurch gelöst, daß in der Meßkreisebene jedes Rades mindestens ein Oberflächenpunkt der Lauffläche und dessen radialer Abstand (X-Richtung) zum Bezugspunkt ermittelt wird, daß in unterschiedlichen aber vorgegebenen radialen Lagen mindestens zwei Punkte an jeder Spurkranzflanke durch axiale (Z-Richtung) Antastung ermittelt werden und deren radiale und axiale Lage in Bezug auf ein Referenzprofil ermittelt wird, worauf die radiale Lage eines Sollprofils ermittelt wird, das mindestens einen der ermittelten Punkte tangiert und bei dem gleichzeitig die übrigen Punkte auf dem Sollprofil oder radial außerhalb des Sollprofils liegen. Durch die Antastung eines Oberflächenpunktes in der Meßkreisebene und auf der Lauffläche, des verschlissenen Rades ist eine erste Position markiert und es kann die Lage dieses Punktes zu einem Bezugspunkt bestimmt werden, wodurch, nachdem die seitliche Lage des Profils bereits bekannt ist, eine räumliche Orientierung für den zugeordneten Rechner und die zugeordnete Steuerung möglich wird. Hierbei kann durchaus der angetastete Punkt in der Meßkreisebene auf der Lauffläche als Bezugspunkt definiert werden. Da in der Meßkreisebene auch der Durchmesser der Lauffläche eines Eisenbahnrades bestimmt wird, liegt hiermit auch eine erste Information zur Durchmesserbestimmung vor und es kann so auch ein Radialschlag ermittelt werden. In einem vorgegebenen radialen Abstand zu diesem ersten ermittelten Punkt wird nun eine Seitenantastung vorgenommen und damit die Spurkranzflanke angetastet. Der radiale Abstand zum ersten ermittelten Punkt für diese seitliche Antastung der Spurkranzflanke ist im Prinzip frei wählbar und richtet sich nach dem typischen Verschleißzustand des Profils. Der Abstand sollte relativ klein gewählt werden, z. B. 6 mm, damit ein Punkt etwa dicht oberhalb des Hohlkehlenauslaufs der Übergangshohlkehle von verschlissener Lauffläche zu verschlissener Spurkranzflanke angetastet wird. Hierdurch kann eine erste Aussage über die Dicke des verschlissenen Spurkranzes erreicht werden. Eine weiter radial auswärts liegende Antastung des Spurkranzes ergibt einen dritten Lagepunkt des Istprofils und es kann jetzt bereits vom Rechner geprüft werden, ob eine Sollkontur an mindestens einen Punkt der drei angetasteten Punkte so angelegt werden kann, daß die beiden übrigen Punkte radial außerhalb dieses Sollprofils, also sozusagen im Werkstoff des Istprofils liegen. Wird jedoch bei der Antastung des zweiten Punktes, also bei der ersten Seitenantastung der Spurkranzflanke festgestellt, daß der laterale Abstand zwischen diesem Punkt und der Meßkreisebene einen bestimmten Grenzwert überschreitet, so kann bereits die Aussage gemacht werden, daß weiter radial auswärts liegende Meßpunkte auf der Spurkranzflanke des verschlissenen Spurkranzes für das Neuprofil nicht mehr von Bedeutung sind. Um die korrekte Lage des Neuprofils zu ermitteln, wird daher mindestens ein weiterer Meßpunkt nicht, wie vorher beschrieben, weiter radial auswärts, sondern vielmehr weiter radial einwärts gelegt. Hierdurch kann präziser der Übergangsbereich zwischen der verschlissenen Spurkranzflanke und der verschlissenen Lauffläche ermittelt und damit auch das zu reprofilierende neue Profil präziser positioniert werden.

Vorteilhafterweise werden zwischen der genannten Istlage des an der Spurkranzflanke ermitteltes Punktes und dem lateralen Grenzabstand mindestens zwei weitere Oberflächenpunkte in unterschiedlichen radialen Lagen angetastet. Hierdurch wird die Information über die Verschleißkontur im kritischen Bereich immer präziser, so daß die zu reprofilierende neue Kontur immer genauer positioniert werden kann. Mit dem erfindungsgemäß Verfahren gelingt es somit unterschiedliche Verschleißzustände zu unterscheiden und hierauf mit unterschiedlichen Meßstrategien zu reagieren, so daß immer die für die Lage des Neuprofils kritischen Punkte erkannt werden.

Eine weitere Ausgestaltung sieht vor, daß zusätzlich der radiale Abstand mindestens eines Oberflächenpunktes mindestens im seitlich äußeren Bereich der Lauffläche, in dem der geringste Verschleiß zu erwarten ist, relativ zum Bezugspunkt ermittelt und der radiale Abstand dieses Punktes zum entsprechenden Punkt des herzustellenden Neuprofils einer Entscheidung über eine Schnittaufteilung eines Reprofilierungsprozesses zugrundegelegt wird. Durch die beschriebenen Maßnahmen erhält man Information über die Gesamtspantiefe, die zur Wiederherstellung des Profils im Laufflächenbereich erforderlich ist. Diese Gesamtspantiefe kann einer Überprüfung der notwendigen Maschinenleistung sowie der Vorgabe eines bestimmten Vorschubes zugrundegelegt werden und es kann darauf dann eine zweckmäßige Schnittaufteilung erfolgen, derart, daß einerseits die Maschinenleistung günstig ausgenutzt wird und andererseits ein für das eingesetzte Werkzeug brauchbarer Spantiefenbereich und damit ein gewünschter Spanbruch und ein üblicher Verschleiß der Werkzeugschneide erreicht wird.

Ergänzend ist dann noch vorgeschlagen, daß zur Entscheidung über eine zweckmäßige Schnittaufteilung die Spurkranzkuppe radial angetastet und deren radialer Abstand zur Spurkranzkuppe des Sollprofiles ermittelt wird. Die hier ermittelte radiale Abstandsgröße kann eine andere Schnittaufteilung notwendig machen. Es ist daher insbesondere in den Fällen, in denen starker Spurkranzverschleiß aufgetreten ist, auch das hier ermittelte Maß bei der Schnittaufteilung zugrundezulegen und es kann im Rechner ggf. ermittelt werden, welches Maß das kritische Maß für eine bestimmte Schnittaufteilung ist.

Auch ist nach der Erfindung noch vorgeschlagen, daß der Bezugspunkt in radialer Richtung in den angetasteten Punkt P 1 auf die durch eine Radsatzwelle gehende Rotationsachse gelegt wird. Hierdurch kann sehr einfach mit den bereits beschriebenen Antastungen gleichzeitig der alte und neue Durchmesser des angetasteten Rades ermittelt bzw. ein einfach zu definierender Bezugspunkt geschaffen werden.

Eine erfindungsgemäße Einrichtung zur Durchführung des erfindungsgemäßen Verfahrens ist gekennzeichnet durch Mittel zur Fixierung mindestens eines Rades eines Radsatzes relativ zu einem definierten Bezugspunkt, durch mindestens eine Tasteinrichtung zur Antastung der Oberfläche des anzutastenden Rades, welche von einem zugeordneten Trägerschlitten getragen und bewegt wird, welche die Tasteinrichtung mindestens radial und axial, bezogen auf das Rad, bewegen kann, wobei der Trägerschlitten mit Antriebsmitteln zur Durchführung der genannten Bewegungen und mit Wegmeßmitteln zur Ermittlung der Größe des zurückgelegten Weges in den genannten Richtungen und bezogen auf den Bezugspunkt ausgerüstet ist, wobei die Wegmeßmittel weiter mit mindestens einem Rechner zur Verarbeitung der von den Wegmeßmitteln gelieferten Daten und die Antriebsmittel weiter mindestens mit einer mit dem Rechner verbundenen Steuerung verbunden sind und wobei dei Tasteinrichtung mit mindestens einem Taster und mit dem Taster zugeordneten Wegmeßmitteln zur Ermittlung der Weggröße der Tasterbewegung in Tastrichtung ausgerüstet ist und wobei die dem Taster zugeordneten Wegmeßmittel mindestens mit dem Rechner verbunden sind. Die Mittel zur Fixierung eines Radsatzes können beispielsweise die Körnerspitzen einer Meßmaschine oder einer bekannten Radsatzdrehmaschine sein. Der definierte Bezugspunkt kann auf der Mittellinie durch die Körnerspitzen der Maschine liegen. Es kann aber auch an irgendeiner beliebigen anderen Stelle im Raum oder an der Maschine ein solcher Bezugspunkt definiert werden. Der Trägerschlitten, der die Tasteinrichtung radial und axial bewegt und trägt, kann ein Kreuzschlitten sein, bei dem die Schlitten z. B. über CNC-gesteuerte Antriebe verfahren werden. Über diese CNC-gesteuerten Antriebe liegt dann eine erste Weginformation über die Position der Tasteinrichtung vor. Die CNC-Steuerung wirkt zusammen mit den notwendigen Antriebsmitteln und den Wegmeßmitteln. Ein zugeordneter Rechner bearbeitet die von den CNC-gesteuerten Antrieben und deren Wegmeßmittel kommenden Daten. Gleichzeitig werden über eine mit dem Rechner verbundene Steuerung den CNC-gesteuerten Antriebsmitteln aufgrund entsprechender Signale der Tasteinrichtung Steuerimpulse, beispielsweise zur Stillsetzung eines Supportschlittens zugeleitet. Ein zur Tasteinrichtung gehörender Taster, der seinerseits auch mit Wegmeßmitteln zur Ermittlung des Tastweges relativ zur am Kreuzschlitten fixierten Tasteinrichtung verbunden ist, kann beispielsweise in Z-Richtung zunächst in eine markante Ebene, beispielsweise die sog. Meßkreisebene gefahren werden. Hierzu muß zunächst in irgendeiner Weise eine Information über die Z-Position des Rades, das angetastet werden soll, vorliegen. Diese Information kann z. B. durch einen separaten Antastvorgang mit einem separaten Taster erhalten werden. Es ist aber auch möglich, den erfindungsgemäßen Taster hierzu zu verwenden und eine Stirnseite des Rades anzufahren. Hierdurch wird die erste Information über die Lage des Rades in Z-Richtung erreicht. Der Abstand der Meßkreisebene von dieser angetasteten Stirnseite des Rades ist bekannt und es kann nun über eine entsprechende Weginformation und über die beschriebene Steuerung die Tasteinrichtung in die entsprechende laterale Position gefahren werden. Danach kann dann in X-Richtung, also radial, mittels des beschriebenen Kreuzschlitten der Taster vorgefahren werden bis zur Berührung mit der Lauffläche des anzutastenden Rades. Hierdurch wird eine weitere Information über die Lage des Rades und über die Lage des angetasteten Punktes in der Meßkreisebene erhalten. Es kann nun der Taster um einen im Prinzip beliebigen, jedoch sinnvollen Betrag, z. B. 6 mm, in X-Richtung, also radial, zurückgezogen werden und in dieser Lage in Z-Richtung soweit verfahren werden, bis der Taster in Berührung mit der Spurkranzflanke kommt. Mit diesem Punkt an der Spurkranzflanke und mit dem Punkt in der Meßkreisebene ist der Rechner nunmehr in der Lage ein rechnerintern gespeichertes Sollprofil so zu verschieben, daß es den einen oder den anderen Punkt tangiert und dabei gleichzeitig den jeweils anderen Punkt radial außerhalb dieses Sollprofils, also sozusagen, im Werkstoff des Istprofils, beläßt. Gelingt dies beispielsweise mit dem am Spurkranz angetasteten Punkt, so muß ein weiterer Punkt am Spurkranz, der radial weiter auswärts liegt, angetastet und dessen Lage geprüft werden. Liegt auch dieser Punkt radial außerhalb des Sollprofils, so ist das Sollprofil bereits richtig positioniert.

Damit korrekte Weginformationen erhalten werden, die nicht von unvermeidlichen Bremswegen der Supportschlitten und unvermeidlichen Tastbewegungen der Tastelemente verfälscht werden, wird auch der Tastweg des Tasters über die mit diesem verbundene Wegmeßeinrichtung als Weginformation mit verwertet. Hierdurch wird eine hohe Präzision des ertasteten Weges und damit eine sehr genaue Weginformation erreicht.

Nach einer Ausgestaltung ist vorgeschlagen, daß der Taster der Tasteinrichtung als Winkelhebel ausgebildet ist, mit einem parallel zu einer Radialebene des zu messenden Rades verschiebbar und drehbar und einem senkrecht dazu angeordneten Schenkel , welch letzter an seinem freien Ende ein Tastorgan aufweist und mit Mitteln zur Umwandlung mindestens einer begrenzten Drehbewegung des Schenkels in eine wenigstens angenähert proportionale Längsbewegung sowie mit Mitteln zur Erfassung der Größe der Längsbewegung bezogen auf einen Nullpunkt der relativ zur Tasteinrichtung fixiert ist. Hierdurch gelingt es mit nur einem einzigen Taster sowohl eine Radialantastung (Antastung in X-Richtung) als auch eine Axialantastung (Antastung in Z-Richtung) durchzuführen und gleichzeitig den Tasteraufbau einfach zu halten.

Es ist weiter vorgeschlagen, daß der parallel zu einer Radialebene verschiebbar und drehbar angeordnete Schenkel einen weiteren senkrecht dazu angeordneten Schenkel aufweist, dessen Schwenkbewegung über eine Umlenkeinrichtung in eine Längsbewegung (X-Richtung) eines längsverschieblich geführten Bauteiles umgewandelt wird, wobei das längsverschiebliche Bauteil mit Wegmeßmitteln zusammenarbeitet zur Bestimmung der Größe des in Längsrichtung (X-Richtung) zurückgelegten Weges. Die hierdurch beschriebenen Mittel zur Umwandlung weisen einen einfachen Aufbau und damit eine hohe Funktionssicherheit auf. Bei einer radialen Antastung erfolgt eine direkte Verschiebung des Tastelementes in X-Richtung und es wird bei einer axialen Antastung (Antastung in Z-Richtung) die durch die Antastung entstehende Drehbewegung umgewandelt in eine Längsbewegung in radialer Richtung, also in X-Richtung. Es ist daher auch möglich, da sich in beiden Fällen eine Bewegung eines Bauteils der Tasteinrichtung in X-Richtung ergibt, nur eine einzige Wegmeßeinrichtung vorzusehen. Selbstverständlich ist es auch möglich, die Bewegungen umzukehren und durch die Radialantastung eine Drehbewegung und durch die Axialantastung eine Längsverschiebung des Tastelementes zu bewirken.

Auch ist nach der Erfindung vorgeschlagen, daß die Umlenkeinrichtung im wesentlichen aus einem Prismenelement oder einem Hohlkegel mit je entsprechender Innenfläche, einem Kugelelement und einem Verbindungselement besteht, wobei der Hohlkegel am längsverschieblich geführten Bauteil so befestigt ist, daß eine Linie senkrecht zur Basis durch die Spitze in Verschieberichtung (X-Richtung) verläuft, wobei das Kugelelement an mindestens einem Punkt an der Innenfläche anliegt und mit dem Verbindungselement an dem weiteren Schenkel befestigt ist. Über das Kugelelement mit dem Hohlkegel oder dem Prismenelement ist im Bereich der hier notwendigen Tastwege mit einfachen Mitteln eine Umwandlung der Drehbewegung in die notwendige Längsbewegung mit ausreichender Proportionalitätsgenauigkeit möglich.

Ergänzend ist vorgeschlagen, daß der verschiebbar und drehbar angeordnete Schenkel (6) mit einer Axialkupplung zur Blockade der Verschiebemöglichkeit, sowie mit einem eine Axialkraft auf den Schenkel ausübenden elastischen Element ausgerüstet ist. Hierdurch wird es möglich, bei einer Axialantastung, also einer Antastung in Z-Richtung oder allgemein ausgedrückt, bei einer Antastung in der Richtung, in der eine Drehbewegung des Tastelementes erfolgt, gleichzeitig eine denkbare Axialbewegung der Drehachse des Tastelementes zu verhindern.

Schließlich ist noch vorgeschlagen, daß der weitere Schenkel und das längsverschieblich geführte Bauteil über mindestens ein elastisches Element miteinander gekoppelt sind, derart, daß das Kugelelement immer in Anlage an der Innenfläche des Prismenelements oder des Hohlkegels gehalten wird, wobei dieses elastische Element eine deutlich höhere Federkonstante aufweist, als das elastische Element, welches auf den verschiebbar und drehbar angeordneten Schenkel einwirkt. Bei einer Antastung in X-Richtung wird die beschriebene schwächere Feder axial belastet und es wird die Verschiebebewegung des Tasters über das Kugelelement und z. B. den Hohlkegel auf das längsverschieblich geführte weitere Bauteil übertragen, das mit den Wegmeßmitteln verbunden ist, so daß die Verschiebebewegung ihrer Größe nach vom Wegmeßmittel erfaßt werden kann. Die genannte schwächere Feder wirkt der Verschiebung entgegen und drückt das Tastelement bei Entlastung wieder zurück in die Ausgangsposition. Die stärkere Feder hält hierbei Kugelelement und Innenfläche des Hohkegels in gegenseitiger Anlage. Wird jedoch die beschriebene Axialkupplung betätigt, so kann eine Axialbewegung des zugeordneten Bauteils nicht mehr stattfinden, sondern es ist nur noch eine Drehbewegung möglich. Hierdurch bewegt sich bei Auftreten einer Drehbewegung durch einen axialen Tastvorgang das Kugelelement auf einem Kreisbogen um die zugeordnete Drehachse. Hierdurch aber wandert das Kugelelement auch z. B. auf der inneren Kegelfläche nach außen, wodurch eine Axialverschiebung des Hohlkegels gegen die Federkraft der stärkeren Feder erzwungen wird. Hierdurch wird die vom Tastelement verursachte Drehbewegung in eine mindestens angenähert proportionale Längsbewegung umgewandelt.

Die Erfindung soll nun anhand eines in der Zeichnung dargestellten Ausführungsbeispieles näher erläutert werden.

Es zeigen:

**Figur 1:** schematische Darstellung des Gesamtsystems
**Figur 2:** schematische Darstelung der Tasteinrichtung in Perspektive
**Figur 3:** schematische Darstellung der Bewegungsmöglichkeit der Tasteinrichtung nach Figur 2 in Perspektive

**Figur 4:** typisches Eisenbahnradprofil mit Maßangaben

**Figur 5:** seitliche Antastpunkte zur Ermittlung der Seitenlage des Rades und der Breite des Radreifens

**Figur 6 und Figur 7:** Antastschemata

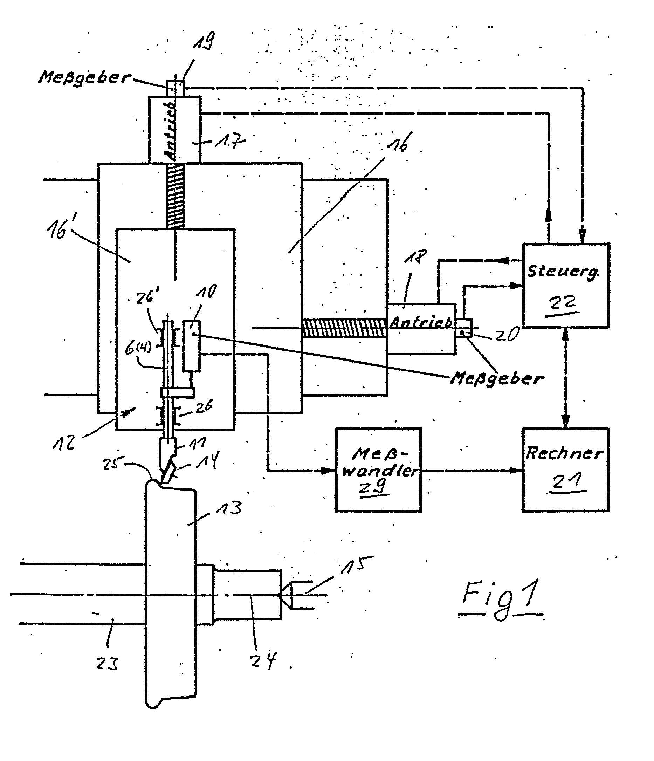

Figur 1 zeigt als Mittel zur Fixierung mindestens eines Rades 13 eines nicht näher bezeichneten Radsatzes die Körnerspitzen 15, die in einer Meßmaschine oder einer üblichen und bekannten Radsatzdrehmaschine gehalten sein können. Für den Meßvorgang selbst ist es unerheblich, in welcher Weise das Rad oder der Radsatz fixiert ist und wie die Mittel hierzu gestaltet sind. Die im Ausführungsbeispiel nach Figur 1 hierfür vorgesehene Körnerspitze 15 ist nur als Beispiels für ein Mittel einer solchen Fixierung anzusehen. Die Lage der Körnerspitze 15 in der nicht dargestellten zugehörigen Maschine ist z. B. bekannt, so daß hierdurch ein definierter Bezugspunkt geschaffen ist. Dieser Bezugspunkt kann auf die durch die Radsatzwelle 23 gehenden Rotationsachse 24 des nicht näher bezeichneten Radsatzes liegen, die ja durch die Körnerspitze 15 verläuft. Eine solche Körnerspitze 15 kann auch gegenüberliegend angeordnet sein, so daß zwischen zweien solcher Körnerspitzen ein vollständiger Radsatz fixiert sein kann.

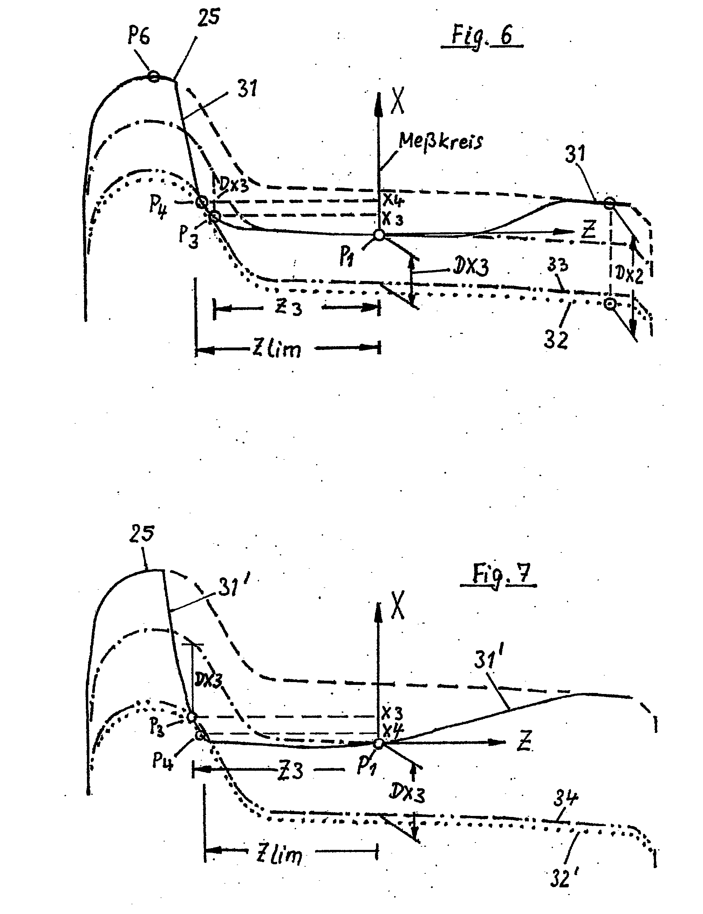

In bekannter Lage zu dem Bezugspunkt muß weiter ein Trägerschlitten 16 mit einem zugeordneten Querschlitten 16' vorhanden sein. Hierbei verfügt sowohl der Trägerschlitten 16 als auch der Querschlitten 16' über einen eigenen Antrieb 17 bzw. 18 mit jeweils einem Wegmeßmittel 19 bzw. 20. Hierbei sorgt der Antrieb 18 für eine Bewegung des Trägerschlittens 16 in Z-Richtung und der Antrieb 17 für eine Bewegung des Querschlittens 16' in X-Richtung (siehe Figur 6 und 7).

Die Ausgangssignale der Wegmeßmittel 19 und 20 der Antriebsmittel 17 und 18 und ebenfalls die Ausgangssignale des Wegmeßmittels 10 werden sowohl einer Steuerung 22 als auch einem Rechner 21 zugeführt. Hierbei werden, soweit erforderlich, die von den Wegmeßmitteln 10, ausgehenden Ausgangssignale im Meßwandler 29 für den Rechner 21 aufbereitet, wobei der Rechner 21 auch Informationen für die Steuerung 22 aufbereitet, so daß die Steuerung 22 die Antriebsmittel 17 und 18 in gewünschter Weise beeinflußt. Es ist mit den beschriebenen Antriebs- und Steuermitteln möglich, die Tasteinrichtung 12 im Rahmen der Bewegungsmöglichkeiten der Gesamteinrichtung in jede gewünschte Position in der X-Z-Ebene mit hoher Genauigkeit zu fahren.

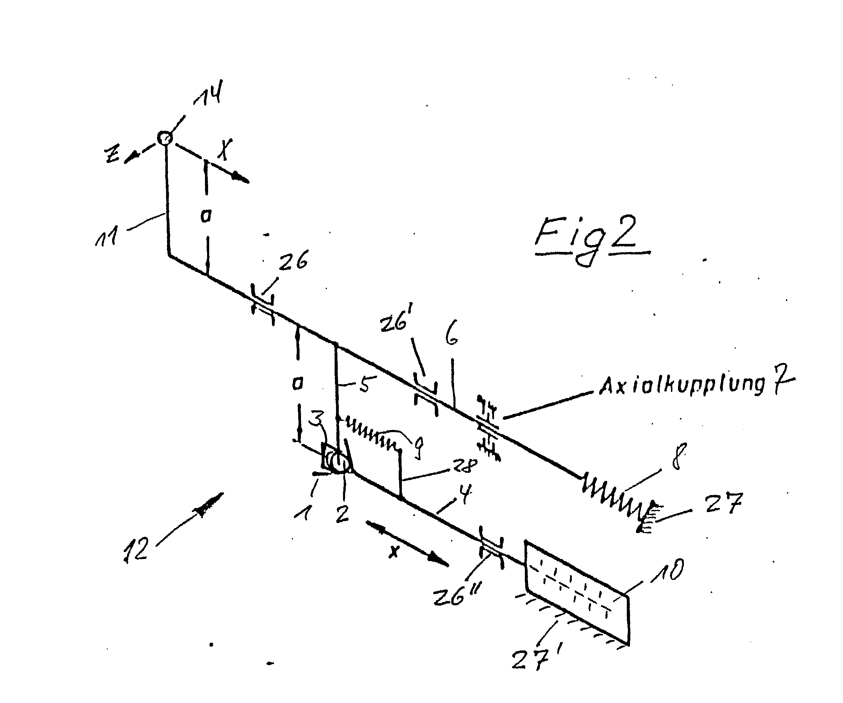

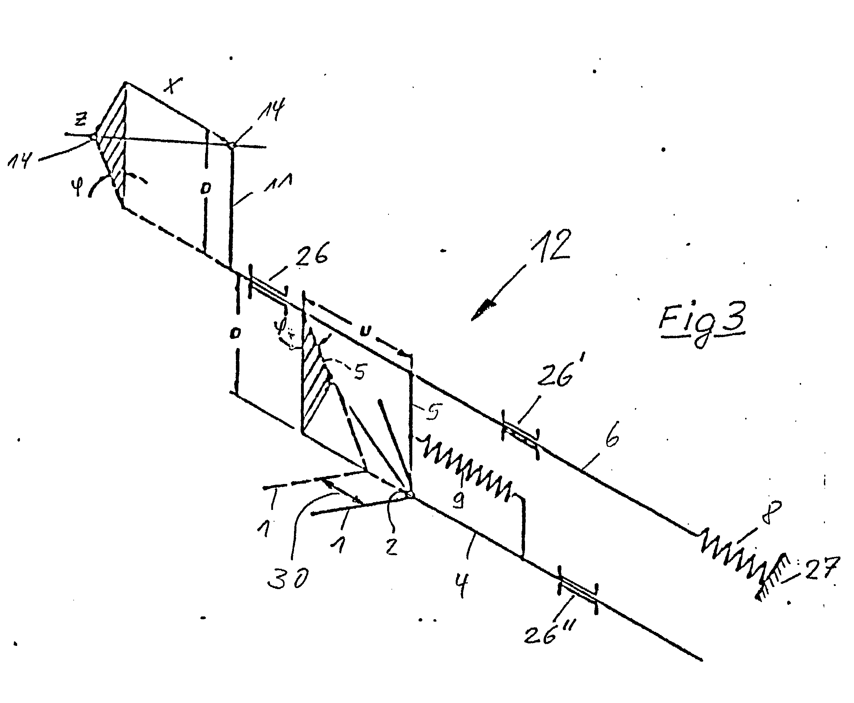

Der Aufbau der Tasteinrichtung 12 selbst ist schematisch in den Figuren 2 und 3 dargestellt. Die schematische Darstellung ist auch völlig ausreichend, weil sich die zur Realisierung des schematischen Aufbaues konkreten konstruktiven Bauteile für den durchschnittlichen Fachmann aus diesem schematischen Aufbau ohne weiteres ergeben. Das dargestellte Aufbauschema kann hierbei durchaus mit unterschiedlichen konstruktiven Mitteln und mit unterschiedlichen Bauelementen gelöst werden.

Figur 2 zeigt die Tasteinrichtung 12 in Ruhelage, bereit eine Antastung in X oder Z-Richtung durchzuführen. Sie besteht im wesentlichen aus einem verschiebbar und drehbar angeordneten Schenkel 6, der in den Lagerstellen 26 und 26' drehbar und in X-Richtung verschiebbar gelagert ist. Die Lagerstellen 26 und 26' könen Teil des nicht dargestellten Gehäuses der Tasteinrichtung 12 sein. Am Schenkel 6 ist weiter eine Axialkupplung 7 angeordnet, die bei Bedarf gesperrt werden kann, so daß für den Schenkel 6 eine Axialbewegung nicht mehr möglich ist und nur noch eine Drehbewegung um die eigene Achse möglich ist. Am hinteren Ende ist der Schenkel 6 in axialer Richtung vorbelastet von einem elastischen Element 8, beispielsweise von einer Spiraldruckfeder. Die Spiraldruckfeder stützt sich an einem Gegenlager 27 ab, das vom genannten und nicht dargestellten Gehäuse der Tasteinrichtung 12, aber auch beispielsweise vom Querschlitten 16', gebildet sein kann. Dies ist deswegen möglich, weil die gesamte Tasteinrichtung 12 und damit auch deren evtl. vorhandenes Gehäuse relativ zum Querschlitten 16 mindestens während des Tastvorganges in Ruhe ist.

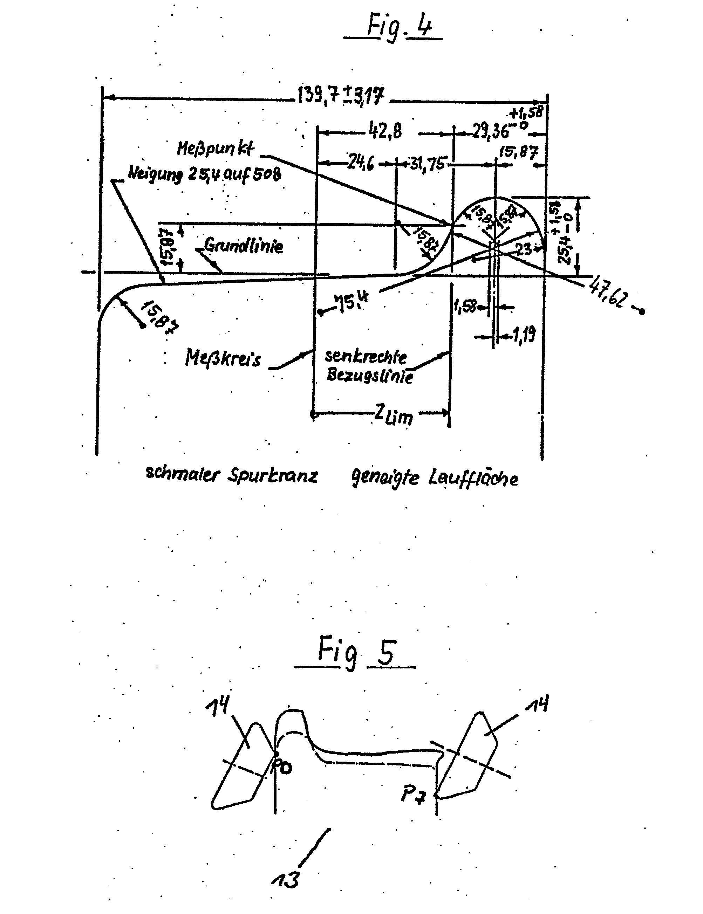

Das dem elastischen Element 8 gegenüberliegende Ende des Schenkels 6 weist einen senkrecht hierzu gerichteten weiteren Schenkel 11 von der Länge a auf. Am freien Ende dieses Schenkels 11 ist ein Tastvorgang 14, beispielsweise in Form einer kegelstumpfförmigen Rolle, deren Kegelachse die Drehachse ist, angeordnet (siehe Figur 1 und Figur 5). Außer dem Schenkel 11 ist, vorzugsweise parallel zum Schenkel 11 versetzt, ein weiterer Schenkel 5 in senkrechter Anordnung zum Schenkel 6 an diesem befestigt. Schenkel 5 weist ebenfalls die Länge a auf.

Parallel verlaufend zum Schenkel 6 ist ein weiteres längsverschieblich geführtes Bauteil 4 vorgesehen, das in der Lagerstelle 26", die ebenfalls z. B. Teil des nicht dargestellten Gehäuses sein könnte, längsverschieblich geführt ist. In Längsrichtung, also wie dargestellt in Figur 2, in X-Richtung wirkend, ist das Bauteil 4 mit dem Schenkel 5 über ein elastisches Element 9, beispielsweise eine Spiralfeder, verbunden. Hierbei kann die Spiralfeder 9 beispielsweise über eine Anlenkung 28 am Bauteil 4 befestigt sein. Das eine Ende des Bauteils 4 weist in der in Figur 2 dargestellten Anordnung einen Hohlkegel 1 auf. Dieser Hohlkegel 1 arbeitet zusammen mit einem Kugelelement 2, das mittels eines Verbindungselementes 3 an dem weiteren Schenkel 5 an dessen freiem Ende angeordnet ist. Das elastische Element 9 sorgt hierbei dafür, daß das Kugelelement 2 bei fehlender äußerer Krafteinwirkung immer z. B. in den Hohlkegel 1 hineingezogen wird.

Das andere Ende des Bauteils 4 arbeitet mit einem Wegmeßmittel 10 zusammen, das am Gegenlager 27' befestigt ist. Dieses Gegenlager 27' kann wiederum wahlweise vom nicht näher gezeichneten Gehäuse der Tasteinrichtung 12 oder aber auch vom Querschlitten 16' gebildet werden. Mit dem Wegmeßmittel 10 wird der Verschiebeweg des Bauteils 4 in X-Richtung gemessen und es werden die am Wegmeßmittel 10 entstehenden Meßimpulse über den Meßwandler 29 dem Rechner 21 zugeführt.

In der in Figur 2 dargestellten Anordnung kann die Tasteinrichtung 12 mittels der zu Figur 1 beschriebenen Einrichtung in die Meßreisebene (siehe Taping line, Figur 4) gefahren und danach über den Antrieb 17 in X-Richtung radial vorwärts gefahren werden, auf die Lauffläche des Rades zu, bis schließlich das Tastelement 14 im Punkt P1 (siehe Figuren 6 und 7) an der Lauffläche zur Anlage kommt. Eine weitere Bewegung in X-Richtung des Qerschlittens 16' bewirkt, daß eine axiale Verschiebung des Schenkels 6 gegen die Kraft der Feder 8 eintritt, wobei diese axiale Verschiebung über den weiteren Schenkel 5, das Kugelelement 2 und dem Hohlkegel 1 auf das Bauteil 4 übertragen und damit von dem Wegmeßmittel 10 in seiner Größe gemessen wird. Nach einem beliebig vorwählbaren Weg, der vom Wegmeßmittel 10 ermittelt wird, wird der Antrieb 17 über die Steuereinrichtung 22 stillgesetzt und die Position des Querschlittens 16' vom Wegmeßmittel 19 an den Rechner 21 und die Steuereinrichtung 22 weitergegeben. Da eine Weginformation des Wegmeßmittels 10 beim Rechner 21 vorliegt, kann die exakte Position des vom Tastorgang 14 angetasteten Punktes P1 vom Rechner ermittelt werden. Hierbei ist das angestrebte Sollprofil des Rades in seiner Kontur bekannt und beispielsweise im Rechner 21 gespeichert. Es kann sich beispielsweise um eine Kontur wie in Figur 4 dargestellt handeln. Es ist dort ein Radprofil dargestellt, wie es in üblichen Eisenbahnhandbüchern in den Vereinigten Staaten von Amerika enthalten ist.

Für eine Antastung der Spurkranzflanke beispielsweise im Punkt P 3 nach Figur 6 wird in entsprechendem radialem Abstand vom Punkt P 1 die Tasteinrichtung 12 über den Antrieb 18 in Z-Richtung gegen die Spurkranzflanke verfahren. Kommt das Tastorgan 14 an der Spurkranzflanke an, so ergibt sich durch die Weiterfahrt des Trägerschlittens 16 in Z-Richtung eine Auslenkung des Tastorgangs 14, wobei diese Auslenkung über den Schenkel 11 eine Drehbewegung des Schenkels 6 erzeugt. Damit nicht gleichzeitig auch eine Axialbewegung des Schenkels 6 erfolgen kann, wird die mögliche Axialbewegung von der Axialkupplung 7 verhindert, die in dem hierfür vorgesehenen Schaltzustand nur noch eine Drehbewegung des Schenkels 6 zuläßt. Infolge der vom Tastorgan 14 bewirkten Drehbewegung des drehbaren Schenkels 6 wird auch der weitere Schenkel 5 gedreht, so daß das Kugelement 2 sich ebenso wie das Tastorgan 14 auf einem Kreisbogen um den Schenkel 6 bewegt. Das Kugelement kommt hierbei einseitig an der Oberfläche z. B. des Hohlkegels 1 zur Anlage und zwingt damit den Hohlkegel 1 axial in X-Richtung auszuweichen, wodurch gegen die Federkraft der Feder 9 eine entsprechende Axialbewegung des längsverschieblich geführten Bauteils 4 erzwungen wird. Die Kreisbewegung des Tastorgans 14 ist damit in eine Längsbewegung des Bauteils 4 umgewandelt worden, wobei diese Längsbewegung mindestens angenähert proportional der Auslenkung des Tastorgangs 14 ist. Da es sich bei solchen Antastungen nur um kleine Bewegungen handelt, wird eine ausreichende Genauigkeit der Proportionalität erreicht.

Die Größe der Axialbewegung des Bauteils 4 wird von dem Wegmeßmittel 10 gemessen und ggf. über den Meßwandler 29 dem Rechner 21 zugeführt. Die Auslenkungen des Tastorgangs 14 und des Kugelements 2 sind in Figur 3 als schraffierte Flächen dargestellt. Der Auslenkwinkel ist hierbei mit dem griechischen Buchstaben phi bezeichnet. Hierbei hat die Auslenkung um den Winkel phi eine Axialverschiebung des Bauteils 4 um den Betrag 30 bewirkt. Es muß noch darauf hingewiesen werden, daß das elastische Element 9 eine deutlich größere Federkonstante als das elastische Element 8 aufweisen muß, um eindeutige Präferenzen zu schaffen. Es muß weiter deutlich darauf hingewiesen werden, daß das Referenzprofil nicht dem Sollprofil entsprechen muß, sondern im Prinzip beliebig sein kann. Allerdings muß die Abweichung zwischen Sollprofil und Referenzprofil mindestens für jeden Tastpunkt bekannt sein.

Nachdem nun der grundsätzliche Aufbau und die grundsätzliche Wirkungsweise der erfindungsgemäßen Einrichtung beschrieben ist, soll nachfolgend die Verfahrensweise anhand der Figuren 6 und 7 beschrieben werden.

### I. Grundprinzip

Die Tasteinrichtung 12 enthält einen Meßtaster mit einem Tastorgan 14, das als Meßrolle mit 2 Meßkanten A und B ausgebildet ist. Er kann in X-Richtung in seiner Führung 26,26' axial verschoben und um die X-Achse gedreht werden. Über z. B. eine Prismenführung 1 wird die axiale Bewegung wie auch die Drehung um die X-Achse in eine translatorische Bewegung eines digitalen Meßwertgebers 10, z. B. des Typs Heidenhain MT 60, umgesetzt. Durch eine umschaltbare Arretierung 7 kann bei der Messung in Z-Richtung eine Bewegung des Meßtasters in X-Richtung verhindert werden.

Die Tasteinrichtung 12 befindet sich auf einem in der Achsrichtung X und Z mit Hilfe der Antriebe 17, 18 steuerbaren Kreuzschlitten 16, 16'. Ein Meßvorgang erfolgt so, daß mit Hilfe der Steuerung 22 der Kreuzschlitten 16, 16é zu einem Ort, der hinter dem zu messenden Objekt liegt, verfahren wird. Sobald das Tastorgan 14 berührt und um einen vorgebbaren Betrag ausgelenkt ist, wird dies über den Meßwertgeber 10 (z.B. Fabrikat Heidenhain MT 60) und über den zugehörigen Meßwandler 29 (z.B. Fabrikat Heidenhain VRZ 403) und eine Schnittstelle (z.B. V24 Schnittstelle) dem Rechner 21, z.B. der Steuerung 22 des Typs Siemens 850 T mit integriertem PC (Typ S 5 mit Rechenfähigkeit) mitgeteilt. Der Rechner 21 setzt dann mit Hilfe der Steuerung 22 den Kreuzschlitten sofort still. Dabei tritt bis zum Stillstand ein Bremsweg auf.

Die Position des zu messenden Objektes ergibt sich aus der Position des Tastelementes und des Kreuzschlitten 16, 16' beim Stillstand. Der Rechner 21 ermittelt die Position des Kreuzschlittens 16, 16' anhand der Meßsysteme 19, 20 des Kreuzschlitten 16, 16', z.B. ROD 426 Impulsgeber mit zugehörigen Siemens Meßkreiskarten.

Der Rechner führt die Verknüpfung der Meßwerte zur Bestimmung der Ortposition durch.

Bei sich bewegenden Meßobjekten, z.B. einem rotierenden Radsatz der in eine Maschine gespannt ist, ist die Kenntnis der Unrundheit und des Planlaufes des Meßobjektes wichtig.

Zur Erfassung z.B. des Rund- oder Planlaufes des Meßobjektes, also z.B. des Rades 13, benutzt der Meßwandler 29 Meßwertspeicher für die minimalen und maxialen Meßwerte des Meßvorganges, die nach Stillstand des Kreuzschlittens 16, 16' vom Rechner 21 für den Bereich einer Umdrehung oder für einen Winkel, den der Rechner über ein Meßsystem, z.B. ROD 426 Impulsgeber, das in der Drehachse des Meßobjektes angebracht ist, ermittelt, ausgelesen werden.

## II. Vermessung eines Radprofils z. B. nach Figur 4

Zunächst wird z. B. mit Hilfe der Tasteinrichtung 12 die axiale Lage mindestens eines Rades 13 im Raum festgestellt. Es wird in Z-Richtung angetastet. Eine Schlagmessung ergibt hier die wichtige Kenngröße des höchsten Radsatzpunktes.

Es erfolgt eine Messung des verschlissenen Raddurchmessers in der Meßkreisebene in Meßpunkt P 1 mit einer Antastung in X-Richtung, nachdem vorher die Tasteinrichtung 12 so verfahren wurde, daß der Tastpunkt des Tastorganes 14 in der Meßkreisebene (Taping Line) liegt. Die Lage der Meßkreisebene ist bekannt (siehe Figur 4) wenn die Lage des Rades 13 im Raum bekannt ist. Es kann nun ebenso wie für die Z-Richtung bereits beschrieben, eine Schlagmessung auch in X-Richtung erfolgen. Danach verfährt der Kreuzschlitten 16, 16' mit der Tasteinrichtung 12 eine kleinere Strecke, z. B. 5 mm in X-Richtung, um dann axial in Z-Richtung mit größtmöglicher Geschwindigkeit einen programmierten Punkt anzufahren, dessen Z-Koordinate z. B. 70 mm sein kann. Hierbei berührt die Tasteinrichtung 12 das verschlissene Radprofil 31 in Punkt P 3. Der Schlitten 16 wird gestoppt und die Position des Meßpunktes P 3 (X3,Z3) in bezug auf ein X,Z-Koordinatensystem, dessen Nullpunkt sich im Meßpunkt P 1 befindet, erfaßt. Dieser Punkt P 3 ist um eine Strecke DX 3 von einen Sollprofil 33 entfernt, dessen Linienzug sich im Rechner 21, z. B. als Wertetabelle oder mathematische Interpolationsfunktion abgespeichert befindet und dessen Nullpunkt Meßpunkt P 1 bildet. Diese Strecke DX 3 ist der Betrag, um den ein aus dem verschlissenen Profil 31 zu erzeugendes Neuprofil 32 mindestens radial zu verschieben ist.

Der Rechner 31 prüft nun, ob Z3 oberhalb oder unterhalb eines Grenzwertes Z lim ist, der den konkaven vom konvexen Teil des Profils trennt (siehe Figur 4). Bei sehr stark verschlissenem Profil liegt Z3 weiter vom Nullpunkt entfernt als Z lim, so daß für die Lage des Neuprofils ein Punkt mit einem kleineren X Koordinatenwert als X3 von Bedeutung ist. Aufgrund dieser Überprüfung veranlaßt der Rechner 21 in gleicher Weise wie bei Punkt P 3 eine Messung eines Punktes P 4 mit X3 > X4 > O, z.B. X4 = 0,5 •X3.

Bei weniger starkem Verschleiß des Profils (|Z3|<|Z lim) wird der Rechner den Meßpunkt P 4 einen gewisser Betrag Δ X, z. B. 4 mm, oberhalb des Meßpunktwertes X3 legen und in gleicher Weise die Messung des Punktes P 4 veranlassen. Z4 und DX 4 (nicht eingezeichnet) sind das Ergebnis dieser Messung und werden bei der nachfolgenden Abstandsberechnung zum Neuprofil 32 verwertet. Der Rechner vergleicht die Beträge DX3 und DX 4, wobei der größere Betrag nun die Lage des neu zu erstellenden Profils angibt. Übersteigt der Unterschied zwischen DX 3 und DX 4 einen gewissen Betrag und ist DX4 größer als DX3, so wird in gleicher Weise ein Punkt P 5 (nicht eingezeichnet) gemessen, der wiederum einen Abstandsbetrag DX5 ergibt. Im allgemeinen reichen drei Meßpunkte im Bereich der Spurkranzflanke aus. In der Nähe des allgemeinen Meßpunktes Pi, der den maximalen Verschiebetrag DXi ergab, wird das neu zu erstellende Profil 32,32' das Verschleißprofil 31,31' tangieren. Durch eine parallele Verschiebung des Neuprofils 32,32' in X-Richtung gelingt es mit Hilfe des Rechners 21 an diesem Punkt eine sog. "witness groove" gemäß AAR (American Association of Railroad) Manual Rule 1 F2 erzeugen. Bei sehr kleinen Unterschieden zwischen DX3 und DX4 entsteht eine solche witness groove, also eine unbearbeitete Stelle, in den Figuren 6 und 7 etwa zwischen den Punkten P 3 und P 4 wenn das Sollprofil in die Lage 33 (Figur 6) oder 34 (Figur 7) gelegt wird.

Zur Bestimmung der Schnittiefe können die Meßpunkte P 2 und P 6 an der Außenfläche des Profils 31,31' und auf der Spurkranzkuppe gemessen werden. Dabei wird für eine vorgegebene Z-Position in X-Richtung angetastet. Mit Hilfe dieser Werte legt der Rechner 21 die Vorgehensweise bei der anschließenden spanenden Bearbeitung des Profils fest, z. B. die Anzahl der Schnitte.

Zur Bestimmung der Radreifenbreite und damit z. B. des dort an der Radaußenfläche (front face of rim) herzustellenden Radius z. B. bei einem Profil nach AAR kann ein weiterer Meßpunkt P 7 an den Radreifenaußenflächen vermessen werden (Figur 5). Die Messung erfolgt analog zu Punkt 2.

Durch die erfindungsgemäße Vorgehensweise wird die Lage des neu zu erzeugenden Profils mit hoher Präzision bei kurzer Meßzeit ermittelt. Der Geräteaufwand kann bei einer Durchführung auf z.B. CNC-gesteuerten Radsatzdrehmaschinen dadurch minimiert werden, daß die CNC-Steuerung mit den dazugehörigen Schlitten und Antrieben mit benutzt werden kann.

## Patentansprüche

1. Verfahren zum Ermitteln der radialen Lage eines durch Reprofilierung herzustellenden Neuprofils in Bezug auf ein nicht dem Sollprofil entsprechendes Istprofil,eines relativ zu einem Bezugspunkt ortsfesten Eisenbahnrades, bei dem die axiale Lage des Istprofils bekannt ist, dadurch gekennzeichnet, das in der Meßkreisebene jedes Rades (13) mindestens ein Oberflächenpunkt P 1 der Lauffläche und dessen radialer Abstand (X-Richtung) zum Bezugspunkt ermittelt wird, daß in unterschiedlichen, aber vorgegebenen radialen Lagen mindestens zwei Punkte (P 3, P 4) an jeder Spurkranzflanke durch axiale (Z-Richtung) Antastung ermittelt werden und deren radiale und axiale Lage im Bezug auf ein Referenzprofil ermittelt wird, worauf die radiale Lage eines Sollprofils (32,32′) ermittelt wird, das mindestens einen der ermittelten Punkte tangiert und bei dem gleichzeitig mindestens die übrigen angetasteten Punkte des Istprofils auf dem Sollprofil oder radial außerhalb des Sollprofils liegen.

2. Verfahren nach Anspruch 1, dadurch gekennzeichnet, dass dann, wenn die Istlage mindestens eines Punktes (P 3) eines ersten Tastvorganges an der Spurkranzflanke in axialer Richtung einen lateralen Grenzabstand (Z lim) zur Meßkreisebene überschreitet (Figur 7), mindestens der weitere Punkt (P 4) in radial weiter innen liegender Lage axial angetastet wird.

3. Verfahren mindestens nach Anspruch 2, dadurch gekennzeichnet, daß zwischen der Istlage von (P 3) und dem lateralen Grenzabstand mindestens zwei weitere Oberflächenpunkte in unterschiedlichen radialen Lagen angetastet werden.

4. Verfahren nach mindestens einem der Ansprüche 1 bis 3, dadurch gekennzeichnet, daß zusätzlich der radiale Abstand mindestens eines Oberflächenpunktes (P2) mindestens im seitlich äußeren Bereich der Lauffläche (31, 31′), in dem der geringste Verschleiß zu erwarten ist, relativ zum Bezugspunkt ermittelt und der radiale Abstand (DX2) dieses Punktes (P2) zum entsprechenden Punkt des herzustellenden Neuprofils (32) einer Entscheidung über eine Schnittaufteilung eines Reprofilierungsprozesses zugrundegelegt wird.

5. Verfahren nach Anspruch 4, dadurch gekennzeichnet, daß zur Entscheidung über eine zweckmäßige Schnittaufteilung die Spurkranzkuppe (25) radial angetastet (P6) und deren radialer Abstand zur Spurkranzkuppe des Sollprofiles ermittelt wird.

6. Verfahren nach mindestens einem der Ansprüche 1 bis 6, dadurch gekennzeichnet, daß der Bezugspunkt in radialer Richtung in den angetasteten Punkt (P1) oder auf die durch eine Radsatzwelle (23) gehende Rotationsachse (24) gelegt wird.

7. Einrichtung zur Durchführung des Verfahrens nach mindestens einem der Ansprüche 1 bis 6, mit Mitteln (15) zur Fixierung mindestens eines Rades (13) eines Radsatzes relativ zu einem definierten Bezugspunkt und mit mindestens einer Tasteinrichtung (12) zur Antastung der Oberfläche des anzutastenden Rades (13), welche von einem zugeordneten Trägerschlitten (16, 16′) getragen und bewegt wird, dadurch gekennzeichnet, daß der Trägerschlitten (16, 16′) die Tasteinrichtung (12) mindestens radial und axial, bezogen auf das Rad (13), bewegen kann, wobei der Trägerschlitten (16, 16′) mit Antriebsmitteln (17, 18) zur Durchführung der genannten Bewegungen und mit Wegmeßmitteln (19,20) zur Ermittlung der Größe des zurückgelegten Weges in den genannten Richtungen und bezogen auf den Bezugspunkt ausgerüstet ist, wobei die Wegmeßmitte (19,20) weiter mit mindestens einem Rechner (21) zur Verarbeitung der von den Wegmeßmitteln (19,20) gelieferten Daten und die Antriebsmittel (17,18) weiter mindestens mit einer mit dem Rechner (21) verbundenen Steuerung (22) verbunden sind und wobei die Tasteinrichtung (12) mit mindestens einem Taster (6,11,14) und mit dem Taster (6,11,14) zugeordneten Wegmeßmitteln (10) zur Ermittlung der Weggröße der Tasterbewegung in Tastrichtung ausgerüstet ist und wobei die dem Taster (12) zugeordneten Wegmeßmittel (10) mindestens mit dem Rechner (21) verbunden sind.

8. Einrichtung nach Anspruch 7, dadurch gekennzeichnet, daß der Taster (6,11) der Tasteinrichtung als Winkelhebel ausgebildet ist, mit einem parallel zu einer Radialebene des zu messenden Rades (13) verschiebbar und drehbar (6) und einem senkrecht dazu angeordneten Schenkel (11), welch letzter an seinem freien Ende ein Tastorgan (14) aufweist und mit Mitteln (1,2,3,5) zur Umwandlung mindestens einer begrenzten Drehbewegung des Schenkels (6) in eine wenigstens angenähert proportionale Längsbewegung sowie mit Mitteln (10) zur Erfassung der Größe der Längsbewegung bezogen auf einen Nullpunkt, der relativ zur Tasteinrichtung (12) fixiert ist.

9. Einrichtung nach Anspruch 8, dadurch gekennzeichnet, daß der parallel zu einer Radialebene verschiebbar und drehbar angeordnete Schenkel (6) einen weiteren senkrecht dazu angeordneten Schenkel (5) aufweist, dessen Schwenkbewegung über eine Umlenkeinrichtung (1,2,3) in eine Längsbewegung (X-Richtung) eines längsverschieblich geführten Bauteiles (4) umgewandelt wird, wobei das längsverschiebliche Bauteil (4) mit Wegmeßmitteln (10) zusammenarbeitet zur Bestimmung der Größe des in Längsrichtung (X-Richtung) zurückgelegten Weges.

10. Einrichtung nach Anspruch 9, dadurch gekennzeichnet, daß die Umlenkeinrichtung im wesentlichen aus einem Prismenelement oder einem Hohlkegel (1) mit je entsprechender Innenfläche, einem Kugelelement (2) und einem Verbindungselement (3) besteht, wobei das Prismenelement oder der Hohlkegel (1) am längsverschieblich geführten Bauteil (4) so befestigt ist, daß eine Linie senkrecht zur Basis durch die Spitze in Verschieberichtung (X-Richtung) verläuft, wobei das Kugelelement (2) an mindestens einem Punkt an der Innenfläche anliegt und mit dem Verbindungselement (3) an dem weiteren Schenkel (5) befestigt ist.

11. Einrichtung mindestens nach Anpsruch 10, dadurch gekennzeichnet, daß der verschiebbar und drehbar angeordnete Schenkel (6) mit einer Axialkupplung (7) zur Blockade der Verschiebemöglichkeit, sowie mit einem eine Axialkraft auf den Schenkel (6) ausübenden elastischen Element (8) ausgerüstet ist.

12. Einrichtung mindestens nach Anspruch 11, dadurch gekennzeichnet, daß der weitere Schenkel (5) und das längsverschieblich geführte Bauteil (4) über mindestens ein elastisches Element (9) miteinander gekoppelt sind, derart, daß das Kugelelement (2) immer in Anlage an der Innenfläche des Prismenelementes oder des Hohlkegels (1) gehalten wird, wobei dieses elastische Element (9) eine deutlich höhere Federkonstante aufweist, als das elastische Element (8), welches auf den verschiebbar und drehbar angeordneten Schenkel (6) einwirkt.

## Claims

1. Method for determining the radial position of a new profile to be produced by reprofiling in relation to an actual profile (not corresponding to the required profile) of a railway wheel, fixed relative to a reference point, in which the axial position of the actual profile is known, characterised by the fact that in the protractor plane of each wheel (13) at least one surface point P1 of the tread and its radial distance (X direction) from the reference point is determined, such that in different but previously given radial positions at least two points (P3, P4) at each wheel flange edge are determined by axial (Z direction) tactile sensing, and their radial and axial position with respect to a reference profile is determined. After this, a determination is made of the radial position of a required profile (32, 32') which at the same time touches at least one of the points determined, and whereby at the same time at least the other sensed points of the actual profile lie on the required profile or lie radially outside the required profile.

2. Method according to claim 1, characterised by the fact that if the actual position of at least one point (P3) of an initial sensing process at the wheel flange edge in the axial direction exceeds a lateral limiting distance ($Z_{lim}$) from the protractor plane (fig. 7), at least the other point (P4) in the radially further internal position is axially sensed.

3. Method according to at least claim 2, characterised by the fact that between the actual position of (P3) and the lateral distance from the boundary, at least two other surface points in different radial positions are sensed.

4. Method according to at least one of the claims 1 to 3, characterised by the fact that, in addition, the radial distance, at least of one surface point (P2) (at least in the lateral outer area of the tread (31, 31') in which the least wear is likely) is determined with respect to the reference point, and the radial distance (DX2) between this point (P2) and the corresponding point of the new profile (32) to be produced is based on a decision regarding a cut distribution of a reprofiling process.

5. Method according to claim 4, characterised by the fact that for deciding on a specific cut distribution, the top of the wheel flange (25) is radially sensed (P6) and its radial distance from the top of the wheel flange of the required profile is determined.

6. Method according to at least one of the claims 1 to 6, characterised by the fact that the reference point in the radial direction is located in the sensed point (P1) or on the axis of rotation (24) passing through a wheelset shaft (23).

7. Device for carrying out the method, according to at least one of the claims 1 to 6 with a device (15) for fixing at least one wheel (13) of a wheelset relative to a defined reference point, and with at least one tactile sensing device (12) for sensing the surface of the wheel (13) to be contacted, which is supported and moved by a corresponding support slide (16, 16'), characterised by the fact that the sensing device (12) can be moved at least radially and axially with respect to the wheel (13), the support slide (16, 16') being fitted with drive mechanisms (17, 18) for executing the movements described, and with path measuring devices for determining the distance travelled in the stated directions, and with respect to the reference point, the distance measurement devices (19, 20) also being equipped with at least one computer (21) for processing the data supplied by the distance measurement devices (19, 20) and the drive mechanisms (17, 18) also being equipped with at least one control (23) connected to the computer (21), and in which the sensing device (12) is equipped with at least one probe (6, 11, 14) and with distance measuring devices (10) allocated to the probe (6, 11, 14) for determining the path length of the sensor movement in the sensing direction, and whereby the distance measurement devices (10) allocated to the sensor (12) are connected at least to the computer (21).

8. Device according to claim 7, characterised by the fact that the probe (6, 11) of the sensing device is designed as a bent lever with one leg (6) that can be moved and rotated parallel to a radial plane of the wheel (13) to be measured and one leg (11) perpendicular to it, the free end of the latter having a sensing device (14) and a means (1, 2, 3, 5) for converting at least a limited rotary movement of the leg (6) to at least an approximately proportional longitudinal movement, and also a means (10) for recording the extent of the longitudinal movement with respect to a zero point which is fixed relative to the sensing device (12).

9. Device according to claim 8, characterised by the fact that the leg (6), movably and rotationally arranged parallel to a radial plane, has another leg (5), perpendicular to this, whose swivelling movement is converted to a longitudinal movement (X direction) by way of a conversion device (1, 2, 3) of a longitudinally movable component (4), the latter (4) operating in conjunction with the path-measuring devices (10) for determining the distance covered in the longitudinal direction (X direction).

10. Device according to claim 9, characterised by the fact that the conversion device consists essentially of a prism element or a hollow cone (1) with a corresponding internal surface, a conical element (2) and a connecting element (3), the prism element or the hollow cone (1) being secured to the longitudinally moved component (4) in such a way that a line perpendicular to the base passes through the tip in the direction of movement (X direction), the conical element (2) lying next to at least one point of the internal surface, and secured to the connecting element (3) at the other leg (5).

11. Device according to at least claim 10, characterised by the fact that the movably and rotatably arranged leg (6) is fitted with an axial connection (7) for arresting the movement, and also with an an elastic element (8) exerting an axial force on the leg (6).

12. Device according to at least claim 11, characterised by the fact that the second leg (5) and the longitudinally moved component (4) are interconnected via at least one elastic element (9) such that the conical element (2) is always held against the internal surface of the prism element or the hollow cone (1), this elastic element (9) having an obviously higher elasticity constant than the elastic element (8) acting on the movable and rotatable leg (6).

## Revendications

1. Procédé pour déterminer la position radiale d'un nouveau profil à réaliser par reprofilage, par rapport à un profil réel ne correspondant pas au profil prescrit, d'une roue de chemin de fer fixe par rapport à un point de référence, procédé dans lequel on connaît la position axiale du profil réel, caractérisé en ce que, dans le plan du cercle de mesure de chaque roue (13), on détermine au moins un point P1 de la surface de roulement et sa distance radiale (selon la direction X) par rapport au point de référence, en ce que dans des positions radiales différentes, mais prescrites, on détermine au moins deux points (P3, P4) sur chaque flanc du boudin par contact de détection en direction axiale (selon la direction Z) ainsi que leurs positions radiale et axiale par rapport à un profil de référence, après quoi on détermine la position radiale d'un profil prescrit (32, 32') qui tangente au moins l'un des points déterminés et pour lequel également au moins les autres points, qui ont fait l'objet d'un contact de détection, du profil réel se trouvent sur le profil prescrit ou radialement à l'extérieur du profil prescrit.

2. Procédé selon la revendication 1, caractérisé par le fait qu'alors, si la position réelle d'au moins un point (P3) d'un premier processus de contact de détection contre le flanc du boudin en direction axiale dépasse une distance latérale limite (Z lim) par rapport au plan du cercle de mesure (figure 7), au moins l'autre point (P4) vient en contact de détection axialement en une position située radialement plus loin à l'intérieur.

3. Procédé selon au moins la revendication 2, caractérisé par le fait qu'entre la position réelle de (P3) et la distance latérale limite, au moins deux autres points de la surface font l'objet d'un contact de détection en des positions radiales différentes.

4. Procédé selon au moins l'une des revendications 1 à 3, caractérisé par le fait qu'en outre on détermine, par rapport au point de référence, la distance radiale d'au moins un point de la surface (P2) au moins dans la zone latéralement extérieure de la surface de roulement (31, 31'), dans laquelle il faut s'attendre à la plus faible usure et par le fait que la distance radiale (DX2) entre ce point (P2) et le point correspondant du nouveau profil (32) à réaliser sert de base à une décision concernant une répartition de la coupe d'un processus de reprofilage.

5. Procédé selon la revendication 4, caractérisé par le fait que pour la décision concernant une répartition judicieuse de la coupe, on établit radialement un contact de détection (P6) avec le sommet (25) du boudin et on détermine sa distance radiale par rapport au sommet du boudin du profil prescrit.

6. Procédé selon au moins l'une des revendications 1 à 6, caractérisé par le fait que l'on place le point de référence en direction radiale au point (P1) qui a fait l'objet d'un contact de détection ou bien sur l'axe de rotation (24) qui passe par un arbre (23) de l'essieu.

7. Dispositif pour appliquer le procédé selon au moins l'une des revendications 1 à 6, comportant des moyens (15) pour fixer au moins une roue (13) d'un essieu par rapport à un point de référence défini et comportant au moins un dispositif de détection (12) qui est prévu pour venir en contact de détection avec la surface de la roue (13) à contacter, et qui est porté et déplacé par un chariot porteur (16, 16') correspondant, caractérisé en ce que le chariot porteur (16, 16') peut déplacer le dispositif de détection (12) au moins radialement et axialement par rapport à la roue (13), étant précisé que le chariot porteur (16, 16') est équipé de moyens d'entraînement (17, 18) pour exécuter les déplacements mentionnés et de moyens (19, 20) de mesure de la course pour déterminer la valeur de la course parcourue dans les directions mentionnées et par rapport au point de référence, étant précisé que les moyens (19, 20) de mesure de la course sont en outre reliés à au moins un ordinateur (21) pour traiter les données fournies par les moyens (19, 20) de mesure de la course et que les moyens d'entraînement (17, 18) sont en outre reliés à un circuit de commande (22) lui-même relié à l'ordinateur (21) et étant précisé que le dispositif de détection (12) est équipé d'au moins un détecteur (6, 11, 1 4) et de moyens (10) de mesure de la course associés au détecteur (6, 11, 14) pour déterminer la valeur du déplacement du détecteur dans la direction du contact de détection et que les moyens (10) de mesure de la course associés au détecteur (12) sont au moins reliés à l'ordinateur (21).

8. Dispositif selon la revendication 7, caractérisé par le fait que le détecteur (6, 11) du dispositif de détection est conçu sous forme d'un levier angulaire comportant un bras (6) qui peut coulisser parallèlement à un plan radial de la roue à mesurer (13) et qui peut tourner, ainsi qu'un bras (11) disposé perpendiculairement à la précédente, le second bras présentant à son extrémité libre un organe de détection (14), et comportant aussi des moyens (1, 2, 3, 5) pour convertir au moins un mouvement de rotation limité du bras (6) en un déplacement longitudinal au moins approximativement proportionnel ainsi que des moyens (10) pour capter la valeur du déplacement longitudinal rapporté à une origine qui est fixe par rapport au dispositif de détection (12).

9. Dispositif selon la revendication 8, caractérisé par le fait que le bras (6) qui est disposé de façon à pouvoir coulisser parallèlement à un plan radial et à pouvoir tourner présente un bras supplémentaire (5) qui lui est perpendiculaire et dont le mouvement de pivotement est converti, par l'intermédiaire d'un dispositif de renvoi (1, 2, 3) en un déplacement longitudinal (selon la direction X) d'un composant (4) guidé avec liberté de coulisser longitudinalement, étant précisé que le composant (4) qui peut coulisser longitudinalement coopère avec les moyens (10) de mesure de la course pour déterminer la valeur de la course parcourue dans la direction longitudinale (selon la direction X).

10. Dispositif selon la revendication 9, caractérisé par le fait que le dispositif de renvoi est essentiellement constitué d'un élément prismatique ou d'un cône creux (1) avec une surface intérieure respectivement correspondante, d'un élément sphérique (2) et d'un élément de liaison (3), étant précisé que l'élément prismatique ou le cône creux (1) est fixé, sur le composant (4) guidé avec liberté de coulisser longitudinalement, de façon telle qu'une droite perpendiculaire à la base et passant par la pointe est orientée dans la direction du coulissement (direction X), tandis que l'élément sphérique (2) s'applique en au moins un point contre la surface intérieure et qu'il est fixé au bras supplémentaire (5) par l'élément de liaison (3).

11. Dispositif selon au moins la revendication 10, caractérisé par le fait que le bras (6), disposé avec liberté de coulisser et de tourner, est équipé d'un accouplement axial (7) pour interdire la possibilité de coulissement, ainsi que d'un élément élastique (8) qui exerce une force axiale sur la bras (6).

12. Dispositif selon au moins la revendication 11, caractérisé par le fait que le bras supplémentaire (5) et le composant (4) guidé avec liberté de coulisser longitudinalement sont couplés l'un à l'autre, par l'intermédiaire d'au moins un élément élastique (9), de façon telle que l'élément sphérique (2) soit toujours maintenu appliqué contre la surface intérieure de l'élément prismatique ou du cône creux (1), étant précisé que cet élément élastique (9) présente une constante élastique nettement plus élevée que l'élément élastique (8) qui agit sur le bras (6) disposé avec liberté de coulisser et de tourner.

Fig 1

Fig2

Axialkupplung 7

EP 0 252 164 B1

*Fig 3*

## Fig. 4

schmaler Spurkranz    geneigte Lauffläche

## Fig 5

EP 0 252 164 B1

Fig. 6

Fig. 7